# EUROPEAN PATENT SPECIFICATION

(11) **EP 2 087 546 B1**
(45) Date of publication and mention of the grant of the patent: **03.10.2012**
(21) Application number: 07746670.4
(22) Date of filing: 23.05.2007
(51) Int. Cl.: H01M 8/04, H02J 1/10

(54) **FUEL CELL SYSTEM INCLUDING RELIABLE POWER DISTRIBUTOR**
BRENNSTOFFZELLENSYSTEM MIT ZUVERLÄSSIGEM VERTEILER
SYSTÈME DE PILE À COMBUSTIBLE COMPRENANT UN DISTRIBUTEUR D'ÉNERGIE FIABLE

(30) Priority: 28.11.2006 KR 20060118311
(43) Date of publication of application: 12.08.2009
(73) Proprietor: Fuelcell Power Inc., Seongnam-city Gyeonggi-do 463-816 (KR)
(72) Inventor: YU, Do-Hwan, Suwon-si, Gyeonggi-do 442-152 (KR); LEE, Sang-Yong, Yongin-si, Gyeonggi-do 448-986 (KR); HONG, Byung-Sun, Seongnam-city, Gyeonggi-do 463-816 (KR); SHINN, Mee-Nam, Yongin-city, Gyeonggi-do 449-821 (KR)
(74) Representative: Jacobson, Claude
(86) International application number: PCT/KR2007/002522
(87) International publication number: WO 2008/066228

(56) References cited:
- WO-A2-2005/036684
- DE-A1- 10 304 792
- US-A1- 2004 219 399
- US-A1- 2006 040 149
- US-B1- 6 612 385
- US-B2- 6 881 509

## Description

### [Technical Field]

The present invention relates to a fuel cell system generating electric power using an electrochemical reaction between hydrogen and oxygen. More particularly, the present invention relates to a fuel cell system that can select one of a system power source and a fuel cell stack as a power source generating power used for a variety of balance of plants (BOPs) and a controller in accordance with an operational condition, and distribute power from the selected power source.

### [Background Art]

A proton exchange membrane fuel cell (PEMFC) uses a proton exchange membrane having a hydrogen ion exchange property as an electrolyte membrane. The PEMFC generates electricity and heat through an electrochemical reaction between a fuel gas containing hydrogen and air containing oxygen. The PEMFC has a quick start capability and can be designed in a small size. Therefore, the PEMFC has been widely used in various applications such as a portable power source, an automotive power source, and a home cogeneration plant.

The PEMFC includes a unit cell having a membrane-electrode assembly and separation plates. A fuel cell stack includes a plurality of unit cells.

A prior art fuel cell system having the fuel cell stack generating electric power through the electrochemical reaction between the hydrogen and oxygen supplies electric power (stack power) generated from the fuel cell stack to an external side. The fuel cell system uses a part of the stack power generated from the fuel cell stack or system power supplied from a system power source as power for operating the BOPs and the controller that are required for driving the fuel cell system. At this point, the fuel cell system does not simultaneously use both of the fuel cell stack and the system power source but selectively uses one of the fuel cell stack and the system power source as the power source in accordance with an operational condition thereof. Therefore, the fuel cell system includes a power distributor that can select one of the system power source and the fuel cell stack as a power source generating power used for the variety of balance of plants (BOPs) and the controller in accordance with an operational condition, and distribute power from the selected power source.

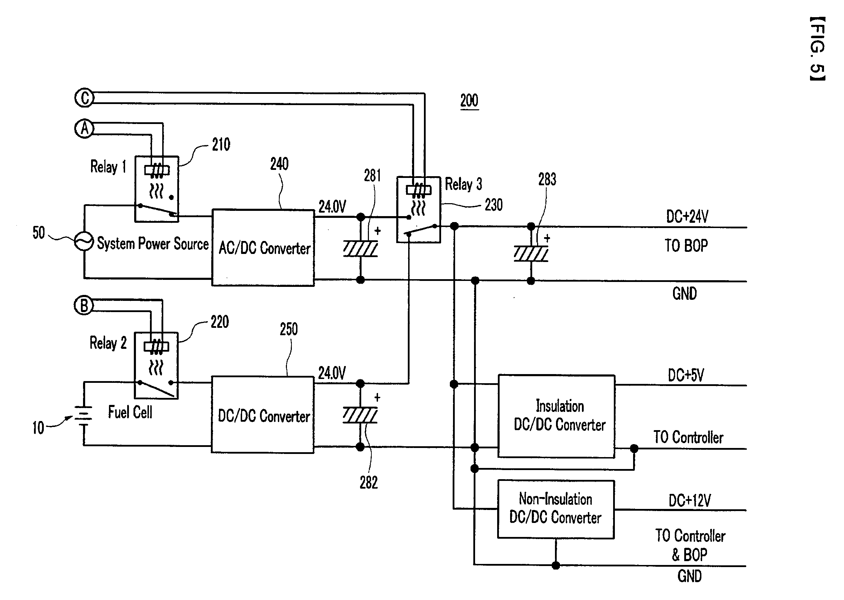

FIG. 5 is a schematic diagram illustrating a connection structure of a power distributor of a prior art fuel cell system.

As shown in FIG. 5, stack power generated from a fuel cell stack 10 and system power supplied from a system power source 50 are input to a power distributor 200.

The power distributor 200 includes a first relay 210 for selectively opening/closing the system power source 50 supplying the system power and an AC/DC converter 240 for converting an alternating current power of AC 220V into direct current power.

The power distributor 200 further includes a second relay 220 for selectively opening/closing the fuel cell stack for supplying the stack power and a DC/DC converter 250 for converting the stack power of DC 48V into DC 24V that can be used for a variety of BOPs and a controller.

The power distributor 200 further includes a third relay 230 for selecting and supplying one of the system power supplied from the AC/DC converter 240 and the stack power supplied from the DC/DC converter 250 in accordance with the operational condition.

In the prior art power distributor, the first and second relays 210 and 220 cut off one of the system power and the stack power, and the third relay 230 selects the one of the system and stack powers that is not cut off as the supply power. Then, the power output from the third relay 230 is used as consumption power for the BOPs and the controller that are required for operating the system.

However, in the course of switching the power source in the third relay 230, a temporary contact point gap for which no power is supplied from the fuel cell stack 10 or the system power source 50 is inevitably generated. As power is temporarily not supplied, the controller and the BOPs, such as a pump or blower, which use the power supplied from the third relay 230, may malfunction.

Therefore, as shown in FIG. 5, condensers 281, 282, and 283 for compensating for the contact point gap are installed on front and rear ends of the third relay 230. However, even when the condensers 281, 282, and 283 are installed, the contact point gap problem may not be sufficiently solved according to an environment condition of a load at a junction point where the system and stack powers are joined and a variety of other control conditions. In addition, there is still a problem in that a level of an output voltage from the third relay 230 fluctuates when the fuel cell system starts and stops operating.

WO 2005/036684 discloses a power conditioning system for connecting a fuel cell power module (FCPM) to an AC power grid. The power conditioning system comprises a one-stage bi-directional DC/AC inverter and an unregulated DC bus between the inverter and the FCPM. During fuel cell stack start up, FCPM parasitics such as pumps, blowers, compressors, etc. may be powered by the grid via the bidirectional inverter. After the FCPM is at its functional power level, it directly provides the power source for the fuel cell power module parasitics.

DE 103 04 792 A1 discloses a fuel cell assembly including an array of individual fuel cells and an internal user. The fuel cells produce direct current which passes through diodes to prevent reverse flow of current. The current feeds the input side of a DC/DC converter. The current from the output side of the DC/DC converter is fed to a DC user circuit in the fuel cell assembly. The fuel cell is connected to the DC side of an AC/DC converter. The AC side is connected to a low-voltage AC network.

### [Disclosure]

### [Technical Problem]

Exemplary embodiments of the present invention provide a fuel cell system having a reliable power distributor system that can select one of a system power source and a fuel cell stack as a power source generating power used for a variety of balance of plants (BOPs) and a controller in accordance with an operational condition and distribute power from the selected power source, and that can prevent the generation of a contact point gap during the distribution of the power.

### [Technical Solution]

In an exemplary embodiment of the present invention, a fuel cell system includes a fuel cell stack generating power through an electrochemical reaction between hydrogen and oxygen, a fuel process unit supplying reformed gas containing hydrogen to the fuel cell stack, an oxygen supply unit supplying oxygen to the fuel cell stack, a variety of balance of plants and a controller that perform starting, stopping, and power generating operations for the fuel cell stack, the fuel process unit, and the oxygen supply unit, and a power distributor selecting one of the fuel cell stack and a system power source as a power source in accordance with an operational condition and distributing power from the selected power source to the BOPs and the controller. The power distributor includes a first relay for selectively opening/closing the system power source, an AC/DC converter for converting AC system power into DC power, a diode for selectively cutting off current supply in accordance with a potential difference between front and rear ends thereof, a second relay for opening/closing the fuel cell stack, and a DC/DC converter for converting stack power into DC power that can be used for the balance of plants and the controller. The system power supply system and the stack power supply system are interconnected at rear ends of the diode and the DC/DC converter to supply the power from one of the system power source and the fuel cell stack to the balance of plants and the controller.

An output voltage converted in the DC/DC converter is higher than an output voltage converted in the AC/DC converter by 0.2-0.5V.

When a potential of an input front end of the diode is less than a potential of an output rear end of the diode, the diode cuts off the current supply. When the potential of the input front end of the diode is equal to or greater than the potential of the output rear end of the diode, the diode allows the current to flow therethrough.

### [Advantageous Effects]

The fuel cell system of the present invention can select one of a system power source and a fuel cell stack as a power source generating power used for the BOPs and the controller in accordance with an operational condition. The fuel cell system can stably distribute the power to the BOPs and the controller without generating the temporary contact point gap by switching the power source in a state where the system power and the stack power coexist.

### [Description of Drawings]

FIG. 1 is a schematic diagram of a fuel cell system according to an exemplary embodiment of the present invention.
FIG. 2 is a schematic view of a connection structure of a power distributor of the fuel cell system of FIG. 1.
FIG. 3 is a flowchart illustrating a power distributing method when the fuel cell system of FIGS. 1 and 2 starts generating power.
FIG. 4 is a flowchart illustrating a power distributing method when the fuel cell system of FIGS. 1 and 2 stops generating power.
FIG. 5 is a schematic diagram illustrating a connection structure of a power distributor of a prior art fuel cell system.

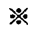 Description of Reference Numerals Indicating Primary Elements in the Drawings 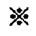

| | | | |
|---|---|---|---|
| 10: | Fuel Cell Stack | 20: | Fuel Process Unit |
| 30: | Oxygen Supply Unit | 40: | Cooling Unit |
| 50: | System Power Source | 100, 200: | Power Distributor |
| 110, 120, 210, 220, 230: | Relay | | |
| 130: | Diode | | |

### [Best Mode]

The present invention will be described more fully hereinafter with reference to the accompanying drawings, in which exemplary embodiments of the invention are shown.

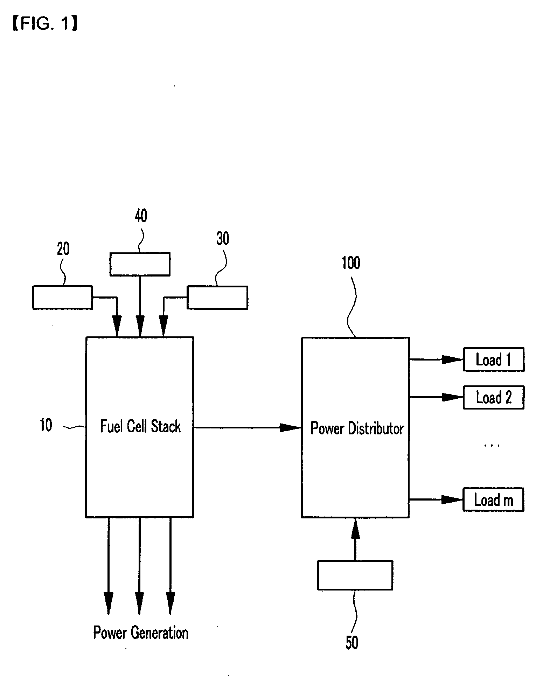

FIG. 1 is a schematic diagram of a fuel cell system according to an exemplary embodiment of the present invention.

As shown in FIG. 1, the present exemplary embodiment includes a fuel cell stack 10 generating DC power through an electrochemical reaction between hydrogen and oxygen, a fuel process unit 20 reforming a fuel into a hydrogen-rich reformed gas and supplying the reformed gas to the fuel cell stack 10, an oxygen supply unit 30 supplying an oxidation agent containing the oxygen to the fuel cell stack 10, a cooling unit 40 for absorbing heat generated from the fuel cell stack 10, a power converter converting the DC power generated in the fuel cell stack 10 into AC power, a plurality of BOPs and a controller for starting, stopping, and maintaining power generation of the system using power generated from the fuel cell stack, and a power distributor 100 distributing the power generated in the fuel cell stack 10 to the BOPs. The fuel cell system further includes a system power source 50 or a sub-power source such as a battery for supplying a start power for the BOPs. The power supply from the system power source 50 is stopped after the fuel cell stack 10 generates power.

Particularly, the power distributor 100 of the fuel cell system of the present exemplary embodiment is designed not to generate a contact point gap in the course of selecting one of the fuel cell stack 10 and the system power source 50 as a power source and to effectively distribute the power to the BOPs. This will be described in more detail hereinafter.

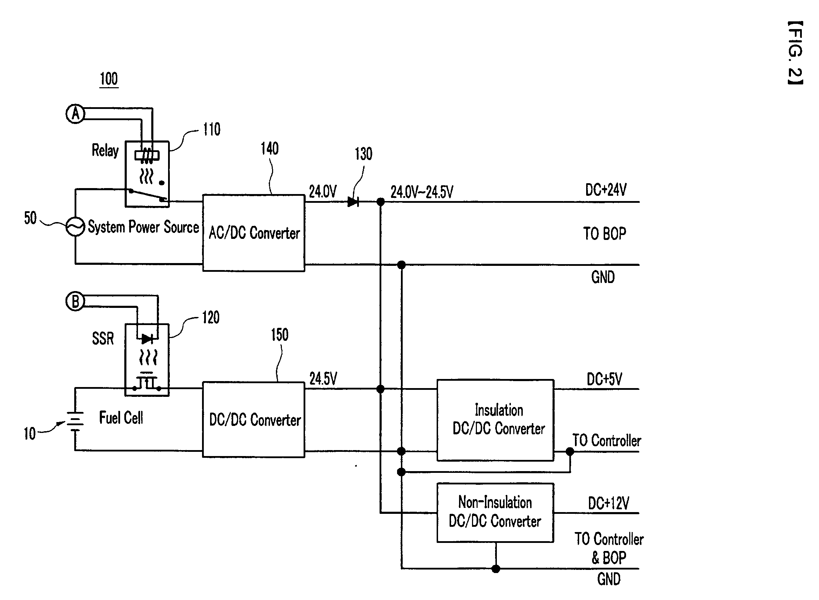

FIG. 2 is a schematic view of a connection structure of a power distributor of the fuel cell system of FIG. 1.

As shown in FIG. 2, the power distributor 100 includes a first relay 110 for selectively opening/closing the system power source 50 supplying the system power, an AC/DC converter 140 for converting AC system power into DC power, and a diode 130 for selectively cutting off the current supply in accordance with a potential difference between front and rear ends.

The power distributor 100 further includes a second relay 120 for selectively opening/closing the fuel cell stack for supplying the stack power and a DC/DC converter 150 for converting the stack power into DC power that can be used for the BOPs and the controller.

In more detail, the first relay 110 always maintains an on-state to supply the system power even when the system stops. Therefore, the first relay starts the operation of the system and supplies the system power to the BOPs and the controller. The first relay 110 is switched to an off-state to cut off the system power supply after the fuel cell stack 10 generates power.

Unlike the first relay 110 that is formed in a mechanical type, the second relay 120 is formed in a solid state relay type. The second relay 120 maintains an off-state to cut off the stack power supply when the system is stopped. After the system starts operating and the fuel cell stack 10 generates power, the second relay 120 is switched to an on-state.

The diode 130 is designed to selectively cut off the power supply in accordance with a potential difference between the front and rear ends and to allow the current to flow only toward the BOPs and the controller.

Since the system power is AC 220V, the AC/DC converter 140 converts the system power into DC 24V that can be used for the BOPs and the controller.

Since the stack power is DC 48V, the DC/DC converter 150 converts the stack power into DC 24.5V that can be used for the BOPs and the controller. Here, when the stack voltage reaches a rated voltage by the activation of the electrochemical reaction in the fuel cell stack 10, the output voltage of the DC/DC converter 150 is set to be higher than the output voltage of the AC/DC converter 140 by 0.2-0.5V.

Then, the system power supply system and the stack power supply system are interconnected at rear ends of the diode 130 and the DC/DC converter 150, and thus the power distributor 100 selects one of the system power source 50 and the fuel cell stack 10 as a power source and supplies the power from the selected power source to the BOPs and the controller.

That is, since the electrochemical reaction of the fuel cell stack 10 is not activated when the system starts operating, only the output voltage of the AC/DC converter 140 is supplied to the BOPs and the controller. When the system generates power and the electrochemical reaction of the fuel cell stack 10 is activated, the second relay 120 is switched to the on-state to supply the stack power from the fuel cell stack 10. Then, since the output voltage of the DC/DC converter 150 is higher than the output voltage of the AC/DC converter 140 by 0.5V, the diode 130 cuts off the current flow of the system power supply system so that the stack power can be supplied to the BOPs and the controller. Further, when the system stops operating, the first relay 110 is switched to the on-state to supply the system power from the system power source and the fuel cell stack 10 stops generating power. Then, the output voltage of the AC/DC converter 140 is higher than the output voltage of the DC/DC converter 150 and thus the diode 130 allows the system power to be supplied to the BOPs and the controller.

As described above, in the power distributor 100, even when the power source for supplying the power to the BOPs and the controller is switched, the voltage variation is only 0.2-0.5V, and thus the operation of the BOPs and the controller can be stably maintained.

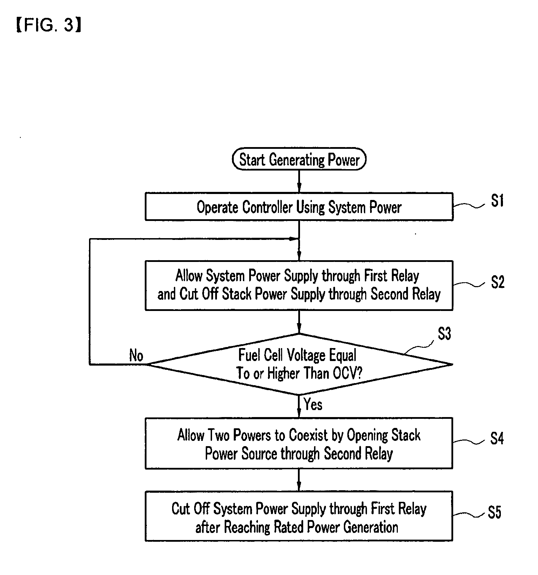

FIG. 3 is a flowchart illustrating a power distributing method when the fuel cell system of FIGS. 1 and 2 starts generating power.

Referring to FIGS. 2 and 3, when the fuel cell system starts generating power, the system power is supplied through the first relay 110 to the BOPs and the controller to operate the BOPs and the controller (S1).

Next, the first relay 110 maintains the on-state to keep supplying the system power and the second relay 120 maintains an off-state to cut off the stack power supply. In this state, the electrochemical reaction in the fuel cell stack 10 is activated by the controller (S2).

After the above, it is determined if the stack voltage is equal to or higher than a preset open-circuit-voltage (OCV) (S3). Then, the second relay 120 maintains the on-state to supply the stack power, and thus the stack power and the system power coexist (S4). At this point, the output voltage of the fuel cell stack 10 is set to be higher than the output voltage of the system power source 50 by 0.5V. Therefore, the system power is maintained in a stand-by state not to pass through the diode 130, and the stack power is supplied to the BOPs and the controller. Then, in the fuel cell system, even when the power source for supplying power to the BOPs and the controller is switched, the voltage variation is only 0.2-0.5V and thus the operation of the BOPs and the controller can be stably maintained.

Next, after the rated power generation of the fuel cell stack 10 is stabilized, the first relay 110 is turned off to cut off the system power supply to prevent the power from being unnecessarily consumed in the system power source (S5).

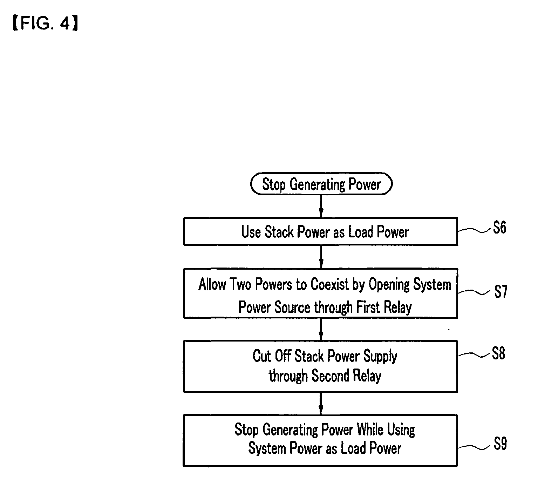

FIG. 4 is a flowchart illustrating a power distributing method when the fuel cell system of FIGS. 1 and 2 stops generating power.

Referring again to FIGS. 2 and 4, the fuel cell system supplies the stack power from the fuel cell stack 10 to the BOPs and the controller (S6), and stops generating power due to some system problems or as the fuel cell stack 10 stops generating power. Then, as a power generation signal is transmitted, the first relay 110 is switched to the on-state to supply the system power and thus the system power and the stack power coexist (S7).

Next, before the fuel cell stack 10 stops generating power, the second relay 120 is switched to the off-state to cut off the stack voltage supply, and thus the fuel cell stack 10 is not overloaded (S8).

Next, the system power is supplied to the BOPs and the controller through the diode 130, and so the BOPs and the controller perform an operation for stopping generating power (S9). Finally, even when the controller stops operating temporarily by the sudden stopping of the power generation of the fuel cell system, the system power can be supplied to the BOPs and the controller upon starting generating since the first relay 110 of the system power supply system is in the on-state.

## Claims

1. A fuel cell system comprising:
a fuel cell stack (10) generating power through an electrochemical reaction between hydrogen and oxygen;
a fuel process unit (20) supplying a reformed gas containing hydrogen to the fuel cell stack;
an oxygen supply unit (30) supplying oxygen to the fuel cell stack;
a variety of balance of plants and a controller, which perform starting, stopping, and power generating operations for the fuel cell stack, the fuel process unit, and the oxygen supply unit; and
a power distributor (100) selecting one of the fuel cell stack and a system power source as a power source in accordance with an operational condition, and distributing power from the selected power source to the BOPs and the controller,
wherein the power distributor as a system power supply system includes a first relay (110) for selectively opening/closing the system power source, an AC/DC converter (140) for converting AC system power into DC power, and a diode (130) for selectively cutting off the current supply in accordance with a potential difference between front and rear ends thereof,
the power distributor as a stack power supply system includes a second relay (120) for opening/closing the fuel cell stack, and a DC/DC converter (150) for converting stack power into DC power that can be used for the balance of plants and the controller, and wherein
the system power supply system and the stack power supply system are interconnected at rear ends of the diode (130) and the DC/DC converter (150) to supply the power from one of the system power source and the fuel cell stack to the balance of plants and the controller.

2. The fuel cell system of claim 1, wherein an output voltage converted in the DC/DC converter is higher than an output voltage converted in the AC/DC converter.

3. The fuel cell system of claim 2, wherein the output voltage converted in the DC/DC converter is higher than the output voltage converted in the AC/DC converter by 0.2-0.5V.

4. The fuel cell system of claim 3, wherein, when a potential of an input front end of the diode is less than a potential of an output rear end of the diode, the diode cuts off a current supply, and, when the potential of the input front end of the diode is equal to or greater than the potential of the output rear end of the diode, the diode allows the current to flow therethrough.

## Patentansprüche

1. Brennstoffzellensystem, das aufweist:
einen Brennstoffzellen-Stack (10), der durch eine elektrochemische Reaktion von Wasserstoff mit Sauerstoff Energie erzeugt;
eine Brennstoffaufbereitungseinheit (20), die ein Spaltgas, das Wasserstoff beinhaltet, an den Brennstoffzellen-Stack liefert;
eine Sauerstoff-Versorgungseinheit (30), die Sauerstoff an den Brennstoffzellen-Stack liefert;
eine Anzahl von Balance of plant-Komponenten und einen Controller, der das Starten, Stoppen und die Energieerzeugungsoperationen des Brennstoffzellen-Stacks, der Brennstoffaufbereitungseinheit und der Sauerstoff-Versorgungseinheit vollzieht; und
einen Energieverteiler (100), der aus dem Brennstoffzellen-Stack und einer System-Energiequelle entsprechend den Betriebsbedingungen eines als Energiequelle auswählt und die Energie von der ausgewählten Energiequelle an die BOP-Komponenten und den Controller verteilt;
wobei der Energieverteiler als ein System-Energieversorgungssystem ein erstes Relais (110) zum wahlweisen Öffnen/Schließen der System-Energiequelle, einen AC/DC-Wandler (140) zur Umwandlung von Wechselstrom-Systemleistung in Gleichstrom-Leistung und eine Diode (130) zum wahlweisen Unterbrechen der Spannungsversorgung entsprechend eines Potential-Unterschieds zwischen dem Frontend und dem Rearend der Diode aufweist,
der Energieverteiler als ein Stack-Energieversorgungssystem ein zweites Relais (120) zum wahlweisen Öffnen/Schließen des Brennstoffzellen-Stacks und einen DC/DC-Wandler (150) zur Umwandlung von Stack-Leistung in eine Gleichspannungsleistung aufweist, welche für die Balance of plant-Komponenten und den Controller genutzt werden kann, und wobei
das System-Energieversorgungssystem und das Stack-Energieversorgungssystem an Rearends der Diode (130) und des DC/DC-Wandlers (150) zusammengeschaltet sind, um die Energie von einem der System-Energiequelle und des Brennstoffzellen-Stacks an die Balance of plant-Komponenten und den Controller zu liefern.

2. Brennstoffzellensystem gemäß Anspruch 1, wobei eine Ausgangsspannung, die in dem DC/DC-Wandler umgewandelt worden ist, größer ist als die Ausgangsspannung, die in dem AC/DC-Wandler umgewandelt worden ist.

3. Brennstoffzellensystem gemäß Anspruch 2, wobei die Ausgangsspannung, die in dem DC/DC-Wandler umgewandelt worden ist, um 0,2 - 0,5 V größer ist als die Ausgangsspannung, die in dem AC/DC-Wandler umgewandelt worden ist.

4. Brennstoffzellensystem gemäß Anspruch 3, wobei, wenn ein Potential eines Eingangs-Frontends der Diode kleiner ist als das das Potential eines Ausgangs-Rearends der Diode, die Diode eine Spannungsversorgung unterbricht, und, wenn das Potential des Eingangs-Frontends der Diode gleich oder größer ist als das Potential des Ausgangs-Rearends der Diode, die Diode der Spannung einen Durchfluss dadurch erlaubt.

## Revendications

1. Système de pile à combustible comprenant :
un empilage de piles à combustible (10) produisant un courant par l'intermédiaire d'une réaction électrochimique entre l'hydrogène et l'oxygène ;
une unité de traitement de combustible (20) fournissant un gaz reformé contenant de l'hydrogène à l'empilage de piles à combustible ;
une unité d'alimentation en oxygène (30) fournissant de l'oxygène à l'empilage de piles à combustible ;
divers équipements d'installations et un contrôleur, qui effectue des opérations de démarrage, d'arrêt et de production de courant de l'empilage de piles à combustible, de l'unité de traitement de combustible, et de l'unité d'alimentation en oxygène ; et
un distributeur de courant (100) sélectionnant parmi l'empilage de piles à combustible et une source de courant de système en tant que source de courant conformément à un état de fonctionnement, et distribuant le courant à partir de la source de courant sélectionnée aux équipements d'installation et au contrôleur,
dans lequel le distributeur de courant en tant que système d'alimentation en courant de système comprend un premier relais (110) pour sélectivement ouvrir/fermer la source de courant de système, un convertisseur CA/CC (140) pour convertir un courant alternatif CA de système en courant continu CC, et une diode (130) pour sélectivement couper l'alimentation en courant conformément à une différence de potentiel entre les extrémités avant et arrière de celle-ci,
le distributeur de courant en tant que système d'alimentation de courant d'empilage comprend un second relais (120) pour ouvrir/fermer l'empilage de piles à combustible, et un convertisseur CC/CC (150) pour convertir un courant d'empilage en courant CC qui peut être utilisé pour les équipements d'installation et le contrôleur, et dans lequel
le système d'alimentation en courant de système et le système d'alimentation en courant d'empilage sont interconnectés aux extrémités arrière de la diode (130) et au convertisseur CC/CC (150) pour fournir le courant provenant de l'un parmi la source de courant de système et l'empilage de piles à combustible aux équipements d'installation et au contrôleur.

2. Système de pile à combustible selon la revendication 1, dans lequel une tension de sortie convertie dans le convertisseur CC/CC est plus élevée qu'une tension de sortie convertie dans le convertisseur CA/CC.

3. Système de pile combustible selon la revendication 2, dans lequel la tension de sortie convertie dans le convertisseur CC/CC est plus élevée de 0,2 à 0,5 V que la tension de sortie convertie dans le convertisseur CA/CC.

4. Système de pile à combustible selon la revendication 3, dans lequel, lorsqu'un potentiel au niveau d'une extrémité avant d'entrée de la diode est plus petit qu'un potentiel d'une extrémité arrière de sortie de la diode, la diode coupe l'alimentation en courant, et, lorsque le potentiel de l'extrémité avant d'entrée de la diode est égal ou supérieur au potentiel de l'extrémité arrière de sortie de la diode, la diode permet au courant de traverser.
